# EUROPÄISCHE PATENTSCHRIFT

(11) **EP 0 419 719 B1**
(45) Veröffentlichungstag und Bekanntmachung des Hinweises auf die Patenterteilung: **30.11.1994**
(21) Anmeldenummer: 89118076.2
(22) Anmeldetag: 29.09.1989
(51) Int. Cl.: H02G 3/16, H05K 7/18

(54) **Anschlusseinheit zum Anschliessen und Verbinden von elektrischen Leitungen**
Junction unit for joining and connecting electrical cables together
Unité de raccordement pour raccorder et connecter des câbles électriques

(43) Veröffentlichungstag der Anmeldung: 03.04.1991
(73) Patentinhaber: SIEMENS AKTIENGESELLSCHAFT, 80333 München (DE)
(72) Erfinder: Knoll, Rudolf, Dipl.-Ing. (FH), D-8137 Berg (DE)

(56) Entgegenhaltungen:
- DE-B- 1 271 792
- FR-A- 2 293 813

## Beschreibung

Die Erfindung betrifft eine Anschlußeinheit aus einem Trägerteil mit einer Bodenfläche und Seitenwandungen und aus von diesem Tragerteil aufgenommenen Anschlußleisten zum Anschließen und Verbinden von ankommenden und abgehenden elektrischen Leitungen, insbesondere in Verteilern von Fernsprechanlagen, wobei das Trägerteil seinerseits mit einem Grundelement lösbar verbindbar ist.

Solche in der Regel länglich ausgebildeten Anschlußleisten werden üblicherweise an ihren Enden mittels Schrauben an einem entsprechenden Rahmen befestigt. Mit den daran anzuschließenden elektrischen Leitungen, wie beispielsweise den zu den einzelnen Endeinrichtungen führenden Systemleitungen und den weiterführenden Leitungen, wird dann die für die Anlage festgelegte Rangierung ermöglicht. Üblicherweise wird an einem Rahmen eine Mehrzahl von Anschlußleisten angebracht, wobei dann auch zwischen einzelnen Leisten eine Leitungsverbindung vorgesehen wird. Bei den bekannten Ausführungen ist das zur Verfügungstellen des für die zu rangierenden Leitungen notwendigen Verdrahtungsraumes problematisch.

Durch die DE-B-1 271 729 ist ein Gestell für elektrische Bauelemente für Fernsprechvermittlungsanlagen bekannt. Bei diesen ist zwischen vorhandenen Holmen eine Mehrzahl von Apparateträgern angeordnet. Solche Apparateträger beinhalten sog. Anschlußfelder, die ihrerseits aus bestimmten Bauelementen aufgebaut werden. Zwischen den einzelnen Anschlußfeldern der jeweiligen Apparateträger werden die notwendigen galvanischen Verbindungen durch Steckereinheiten bewerkstelligt. Es ist nun dadurch bekannt, daß ein solcher Apparateträger aus dem Gestell heraus schwenkbar ist, so daß auch die Rückseite zugänglich wird. Hierzu wird der Apparateträger an individuell vorgesehenen Drehpunkten in Form von an der Längskante eines Holms angesetzten Achslagern gelagert. Diese Achslager sind jeweils fest vorgegeben, so daß keinerlei Flexibilität in der Anbringung eines solchen Apparateträgers gegeben ist. Bei dieser bekannten Anordnung ist es mangels einer durchgehenden Drehgelenkachse nicht möglich, eine Verbindungsleiste an einer beliebigen Stelle an den als Trägerteil fungierenden Holmen aufzusetzen.

Es ist die Aufgabe der Erfindung eine Anschlußeinheit zu schaffen, die montage- und wartungsfreundlich ist und insbesondere eine einfach zu handhabende Änderung der anzuschließenden Leitungen erlaubt. Dies wird dadurch erreicht, daß bei einer Anschlußeinheit der eingangs genannten Art an der freien Kante der einen Seitenwandung durchgehend ein eine Rundform aufweisender Vorsprung angeformt ist und daß eine Seitenfläche der Anschlußleiste eine zu dem Vorsprung passende Gegenform mit der Gestalt einer nach außen offenen Aufnahme aufweist, so daß beim Zusammenfügen des Vorsprunges mit der Aufnahme ein zumindest teilweises gegenseitiges Umschließen erfolgt und eine scharniergelenkartige Verbindung des Trägerteils mit der Anschlußleiste gebildet wird, daß die freie Kante der gegenüberliegenden Seitenwandung als Schraubkanal ausgestaltet ist, der nach dem Zusammenfügen die Schäfte der für die Verschraubung mit der Anschlußleiste dienenden Schraubelemente aufnimmt und daß durch die Formgebung zumindest einer Seitenwandung neben den durch die beiden Seitenwandungen des Trägerteils umschlossenen, einseitig offenen Raum zusätzlich mindestens ein für die Aufnahme von elektrischen Leitungen geeigneter Raum entsteht.

Dadurch, daß die Anschlußleisten zunächst mit einer Seitenfläche auf das Trägerteil aufgrund der ineinander greifenden Formelemente bzw. der daran angepaßten Ausschnitte aufgesetzt werden kann, ergibt sich eine einfache Befestigung und Handhabung durch die damit erreichte Schwenkmöglichkeit. Der längsseitig durchgehend verlaufende Schraubkanal erlaubt zusammen mit dem einfachen Aufstecken der Anschlußleiste an der gegenüberliegenden Seite des Trägerteils eine beliebige Plazierung der Anschlußleiste. Durch die für die scharniergelenkartige Verbindung notwendige Rundform der freien Kante der einen Seitenwandung ist kein zusätzlicher Kantenschutz für darüberlaufende Leitungsdrähte erforderlich. Durch den gebildeten Schraubkanal ergibt sich durch dessen Oberkanten gleichzeitig eine ausreichende Auflage für die Anschlußleiste. Es ist eine durchgehende Drehgelenkachse für eine Vielzahl von Anschlußleisten dadurch vorgegeben, so daß solche Leisten an einer beliebigen Stelle des Trägerteils aufgesetzt werden können. Die einfache Anbringung der Anschlußleiste an dem Trägerteil ermöglicht in Verbindung mit der einfachen Schwenkmöglichkeit die Anwendung von Anschlußleisten, bei denen die Klemmelemente übereinander angeordnet sind. Sind an der entsprechenden Seite der Anschlußleiste insgesamt zwei geeignet plazierte Gegenformen vorgesehen, so kann die Leiste nach einer Drehung um 180 Grad erneut in äußerst einfacher Weise fixiert werden. Dadurch wird das Anklemmen der elektrischen Leiter durch die demnach für jede Anschlußseite mögliche leichte Zugänglichkeit besonders einfach.

Gemäß einer Weiterbildung der Erfindung sind in spezielle Ausformungen der Seitenwandungen und/oder der Bodenfläche des Tragerteils zusätzliche, zur Bildung von Kabel- und Verdrahtungskanälen dienende Elemente und Abstützelemente für die elektrischen Leitungen einbringbar. Solche Abstützelemente sind beispielsweise sog. Rangierhaken, die dann nach Bedarf an die längsseitig durchgehend vorhandenen Ausformungen aufsteckbar sind.

Gemäß einer Weiterbildung der Erfindung ist das Trägerteil als metallisches Strangpressprofil hergestellt und es weist die eine freie Kante der Seitenwandung zur Bildung der scharniergelenkartigen Verbindung eine etwas senkrecht nach innen geneigte, unmittelbar an der Kante dieser Seitenwandung angesetzte vollzylindrische Form auf, die bei ihrem Zusammenfügen mit der Anschlußleiste in eine als Gegenform an einer Seitenfläche dieser Anschlußleiste ausgebildeten, nach außen offene hohlzylindrische Form eingreift. Man erhält also ein einfach herzustellendes Trägerteil, das die bereits geschilderte Multifunktionalität aufweist und von dem man durch einfaches Durchtrennen ein Trägerteil der jeweils erforderlichen Längenabmessung erhält.

Gemäß einer Weiterbildung der Erfindung liegt auf den Kanten des an der einen Längsseite vorhandenen Schraubkanals nach dem Zusammenfügen der die scharniergelenkartige Verbindung bildenden Formteile nach dem entsprechenden Ausrichten der Anschlußleiste diese mit dem an ihr angesetzten und mit Lochungen versehenen Flansch auf. Dies ermöglicht dann auch die einfache Anbringung zur Befestigung von Erdungsblechen, durch die Schutzstecker der Anschlußleisten über das Trägerteil geerdet werden.

Es ist vorgesehen, daß an der die hohlzylindrische Form aufweisenden Seitenfläche der Anschlußleiste jeweils eine weitere bezüglich der Lage des Flansches symmetrisch angeordnete hohlzylindrische Form vorhanden ist. Damit ist in einfacher Weise nach einer Drehung um 180 Grad die Anschlußleiste zu befestigen. Es kann damit problemlos eine Anschlußleiste verwendet werden, bei der in platzsparender und preiswerter Art die Anschlußklemmen übereinander angeordnet sind. Die eine Seite kann dabei ausschließlich den systemseitigen, d. h. den zur Vermittlungseinrichtung führenden Leitungen, und die ihr gegenüberliegende Anschlußseite den beispielsweise zu den Teilnehmern führenden häufiger zu ändernden Leitungen zugeordnet sein. Um Änderungen in der Verdrahtung der untenliegenden Anschlußseite vorzunehmen, ist dann in der geschilderten Weise zur jeweiligen Bearbeitung die Leiste seitenverkehrt anzubringen.

Eine Weiterbildung der Erfindung sieht vor, daß die eine Seitenwandung des Trägerteils zur ihr gegenüberliegenden Seitenwandung hin teilweise nach innen versetzt zu der Bodenfläche geführt ist, so daß sich ein seitlich nach außen offener, zur Aufnahme von elektrischen Leitern dienender Kanal bildet und daß in der Fluchtlinie zur freien Kante an der Bodenfläche und an der freien Kante selbst zum Einhängen eines als Abstützelement für die zu führenden elektrischen Leitungen dienender Rangierhaken geeignete Rippen ausgeformt sind.

Gemäß einer Weiterbildung der Erfindung stellt die obere Rippe die äußere Wandung einer unmittelbar im Bereich der die vollzylindrische Form aufweisenden Kante ausgebildeten einseitig offenen Nut dar. Deren untere Außenfläche ist schräg nach innen geneigt und stellt die Rastfläche für einen an den einzuhängenden Rangierhaken angesetzte Rastnase dar. Insbesondere bei einer erfindungsgemäß gezahnt ausgeführten Rastfläche spreizt sich beim Aufbringen des Rangierhakens die Rastnase in dieser Fläche fest. Damit wird der notwendige stabile kippsichere Sitz des Rangierhakens erzielt. Gemäß einer Weiterbildung ist die Rastfläche etwas stärker geneigt als die Drehlinie der Rastnase. Dadurch wird ein Verkeilen erzielt, das durch die beiderseitige Verzahnung verstärkt wird und Fertigungstoleranzen beider Teile ausgleicht. Mit Hilfe eines einfachen Werkzeuges, z.B. eines Schraubenziehers ist die Rastnase auslenkbar, sodaß ein einfaches Lösen des Rangierhakens möglich ist.

Weitere vorteilhafte Ausgestaltungen der Erfindung sind den restlichen Unteransprüchen zu entnehmen.

Im folgenden wird die Erfindung anhand eines in der Zeichnung dargestellten Ausführungsbeispiels näher erläutert.

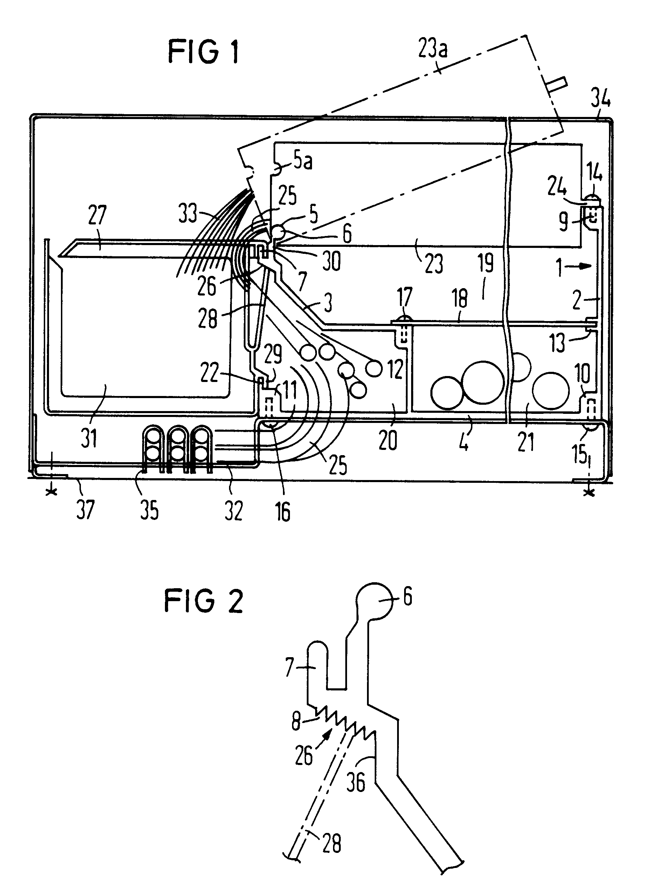

Figur 1 zeigt teilweise im Querschnitt eine vollständige bestückte Anschlußeinheit, Figur 2 die Ausbildung der freien Kanten einer Seitenwandung im vergrößerten Maßstab.

In der Figur 1 ist eine Anschlußeinheit gezeigt, die aus einer Anschlußleiste 23 und einem die Seitenwände 2, 3 und die Bodenfläche 4 aufweisenden Trägerteil 1 besteht. An einem solchen Trägerteil 1 sind zur Bildung eines Verteilerblockes eine Mehrzahl derartiger Anschlußleisten 23 längsseitig aneinandergereiht. Die Anschlußleisten des Ausführungsbeispiels sollen derartig ausgebildet sein, daß sowohl an ihrer oberen Längsseite als auch an der dieser gegenüberliegenden unteren Längsseite Anschlußelemente für ankommende und abgehende Leitungen vorhanden sind. So können beispielsweise die zu den Teilnehmern führenden Rangierdrähte 33, die häufiger zu ändern sind, an der als Bedienungsseite anzusehenden oberen Seite angeschlossen werden. Diese ist also leicht zugänglich, so daß notwendige Änderungen in der Belegung der Leiste problemlos vorgenommen werden können. Die Anschlußelemente für die in der Regel nicht zu ändernden anlagenseitigen, d. h. zur Vermittlungseinrichtung führenden Leitungen 25, sollen an der gegenüberliegenden Längsseite vorhanden sein. Das Trägerteil 1 soll als Strangpreßprofil hergestellt sein, wobei dann jeweils eine beliebige Längenabmessung durch einfaches Abtrennen von der "Meterware" gewonnen wird. Die freie Kante der einen Seitenwand 3 des Trägerteils 1 hat eine durchgehende, leicht nach innen geneigte vollzylindrische Form 6. Auf diese vollzylindrische Form wird die Anschlußleiste 23, die mit einem daran angepaßten Ausschnitt 5 versehen ist, aufgesteckt. Die Anschlußleiste kann dann scharniergelenkartig bewegt werden. Dies ist durch die gestrichelt dargestellte Anschlußleiste 23a angedeutet. Es ergibt sich also für eine einfache Befestigung und Handhabung ein Drehpunkt. Die andere Seitenwandung 2 des Trägerteils weist an der freien Oberkante einen durchgehenden Kanal 9 auf. Nach dem aufgrund der entsprechenden Ausschnitte 5 erfolgtem Aufstecken der Anschlußleiste 23 auf die als vollzylindrische Form 6 ausgebildete Kante der Seitenwand 3 ist an einer beliebigen längsseitigen Stelle des Trägerteils die Anschlußleiste mit ihrem daran angesetzten Flansch 24 auf die Kanten des Schraubkanals 9 aufzusetzen. Mit einer selbstschneidenden Schraube kann nun die Anschlußleiste bei einer entsprechenden Lochung des Flansches 24 an dem Trägerteil 1 befestigt werden. Es ist an der Anschlußleiste 23 ein bezüglich des Flansches 24 symmetrisch zu dem Ausschnitt 5 angeordneter weiterer Ausschnitt 5a vorgesehen. Dadurch kann die Anschlußleiste bei der Anbringung von zugentlastenden Leitern zur jeweiligen Bearbeitung um 180° gedreht und in der geschilderten Weise durch einfaches Aufstecken und Festschrauben befestigt werden. Damit sind problemlos solche Anschlußleisten zu verwenden, bei denen in einer platzsparenden und preiswerten Weise die Anschlußelemente an den sich gegenüberliegenden Längsseiten angebracht sind. Durch die als vollzylindrische Form ausgebildete Kante 6 wird zusätzlich sichergestellt, daß kein zusätzlicher Kantenschutz für darübergeführte Leiter 25 erforderlich ist.

Die eine Seitenwandung 3 des Trägerteils 1 ist nach innen abgebogen zu der Bodenfläche 4 geführt. Dadurch entsteht ein Verdrahtungsraum 20, in dem die z. B. der Anlagenseite zugeordneten elektrischen Leitungen 25 geführt werden. Für diese anlagenseitigen Leitungen 25, kann beispielsweise, wie angedeutet durch metallische Kabelschellen 35 eine Halterung und eine Kontaktierung des Schirmmantels ermöglicht werden. Im Ausführungsbeispiel ist der zur Bodenfläche 4 hin geführte Endbereich der Seitenwandung L-förmig ausgebildet und er weist im Strangpreßprofil einen Kanal 12 auf. Dieser Kanal kann als Schraubkanal verwendet werden, so daß bei Anwendung entsprechender selbstschneidender Schrauben 17 ein Steg oder eine Platte 18 befestigt werden kann. Der andere Endbereich eines solchen Steges oder einer solchen Platte kann in die an der Seitenwandung 2 innenseitig angebrachte Nut 13 eingebracht werden. Durch den Steg oder durch die Platte 18 werden zwei weitere Räume 19 bzw. 21 gebildet. Der Steg 18 bzw. die Platte 18 können für die Befestigung von Baugruppen verwendet werden und es können damit auch im Verdrahtungsraum 21 geführte und der Externseite zugeordnete Leitungen sicher gehalten werden. Im Strangpreßprofil sind im seitlichen Endbereich der Bodenwandung 4 zwei weitere Kanäle 10 bzw. 11 vorhanden. Diese können gleichfalls als Schraubkanäle verwendet werden, so daß an beliebiger Stelle durch die Schrauben 15 bzw. 16 eine Grundplatte mit dem Trägerteil verschraubt werden kann. Eine solche Grundplatte 32 ist beispielsweise notwendig, um zwischen den Verteilerblöcken und einer Wandfläche 37 einen bestimmten Abstand herzustellen. In diesem Wandabstandsbereich können dann unter anderem ankommende oder abgehende Kabel geführt werden. Die durchlaufenden Schraubkanäle 10 bzw. 11 erlauben die Anbringung solcher Grundplatten 32 an jeder beliebigen Stelle.

Um das Führen von Rangierdrähten 33, die zu den einzelnen Anschlußleisten oder zwischen einzelnen Anschlußleisten verlegt sind, zu erleichtern, können sogenannte Rangierhaken bzw. Rangierbügel 27 am Trägerteil 1 angebracht werden. Dies erfolgt im Ausführungsbeispiel im Bereich der nach außen offenen Kammer 20. Zu diesem Zweck weist das Strangpreßprofil im Bereich der als vollzylindrische Form ausgebildeten Kante der Seitenwandung 3 und im Bereich des Schraubkanals 11 an der Bodenwandung 4 Rippen 7 bzw. 22 auf. Je nach Bedarf werden die Rangierbügel 27 mit den an ihnen angeordneten Haken 29 bzw. 30 über die beiden Rippen 7 bzw. 22 gesteckt. Für solche Rangierbügel ist ein fester kippsicherer Sitz erforderlich. Um dies zu erreichen, ist eine Rastnase 28 vorgesehen, die sich an einer Rastfläche 26, die eine Zahnung 8 aufweist, festspreizt. Die Rastfläche 26 ist etwas stärker geneigt als die fiktive Drehlinie der Rastnase 28. Die federnde Rastnase drückt gegen das Profil der Rastfläche. Es wird damit ein gegenseitiges Verkeilen erreicht, wodurch Fertigungstoleranzen der Rastnase 28 und des Profils in der Rastfläche ausgeglichen werden. Durch die Knickspannung wird somit ein fester Sitz des Rangierbügels 27 an jeder beliebigen Stelle der durchlaufenden Rippen 7 bzw. 22 ermöglicht. In der Figur 2 ist die Ausbildung der freien Kante der Seitenwandung 3 gezeigt und der Eingriff der Rastnase 28 durch die gestrichelte Linie angedeutet. Setzt man an der Kante 36 ein in den Raum zwischen dieser Kante 36 und der Rastnase 28 eingebrachtes einfaches Werkzeug, wie es z.B. ein Schraubenzieher darstellt, an so kann daurch Abdrücken der Rastnase der Rangierhaken problemlos gelöst werden.

Die Anschlußeinheit aus Trägerteil 1 und mindestens einer Anschlußleiste 23 ermöglicht also als selbsttragende Einheit neben der äußerst einfachen Befestigung einer solchen Anschlußeinheit weitere Funktionen. Durch die Multifunktionalität des Strangpreßprofils ergeben sich Kabel- und Verdrahtungskanäle, eine einfache Rastbefestigung von Rangierbügeln 27 und die Befestigungsmöglichkeit für Platten bzw. Stege 18. Gleichzeitig ergibt sich die Anschraubmöglichkeit für Bügel oder andere Einbauten bzw. für Grundplatten ohne daß entsprechende Gewinde für Schrauben vorgesehen werden müssen. Daraus folgt insgesamt eine Reduzierung der Herstellungskosten und gleichzeitig eine Reduzierung des für einen derartigen Verteilerblock benötigten Raumes, und es wird gleichzeitig genügend Raum für das Einlegen von Rangierleitungen zur Verfügung gestellt. Die Vorfertigung von Internkabeln mit gleicher Abmantellänge im Verteiler und entsprechende Kontaktierung des Folienschirmes sind gewährleistet. Es ist in einfacher Weise möglich, die Anschlußeinheit durch eine entsprechend angepaßte Haube 34 aus Blech oder Kunststoff abzudecken. Anstelle von Anschlußleisten können auf das erfindungsgemäß ausgebildete Trägerteil 1 auch andere Einbauten angebracht werden.

## Patentansprüche

1. Anschlußeinheit aus einem Trägerteil (1) mit einer Bodenfläche (4) und Seitenwandungen (2, 3) und aus von diesem Trägerteil (1) aufgenommenen Anschlußleisten (23) zum Anschließen und Verbindung von ankommenden und abgehenden elektrischen Leitungen (25, 33) insbesondere in Verteilern von Fernsprechanlagen, wobei das Trägerteil seinerseits mit einem Grundelement (32) lösbar verbindbar ist,
**dadurch gekennzeichnet**,
daß an der freien Kante (6) der einen Seitenwandung durchgehend ein eine Rundform aufweisender Vorsprung angeformt ist und daß eine Seitenfläche der Anschlußleiste eine zu dem Vorsprung passende Gegenform (5) mit der Gestalt einer nach außen offenen Aufnahme aufweist, so daß beim Zusammenfügen des Vorsprunges mit der Aufnahme ein zumindest teilweises gegenseitiges Umschließen erfolgt und eine scharniergelenkartige Verbindung des Trägerteils mit der Anschlußleiste gebildet wird, daß die freie Kante der gegenüberliegenden Seitenwandung (2) als Schraubkanal (9) ausgestaltet ist, der nach dem Zusammenfügen die Schäfte der für die Verschraubung mit der Anschlußleiste dienenden Schraubelemente aufnimmt und daß durch die Formgebung zumindest einer Seitenwandung (3) neben dem durch die beiden Seitenwandungen (2, 3) des Trägerteils (1) umschlossenen einseitig offenen Raum (19) zusätzlich mindestens ein für die Aufnahme von elektrischen Leitungen geeigneter Raum (20) entsteht.

2. Anschlußeinheit nach Anspruch 1,
**dadurch gekennzeichnet**,
daß in spezielle Ausformungen (7, 22, 10 - 13) der Seitenwandungen und/oder Bodenfläche (4) des Trägerteils (1) zusätzli che, die Funktion der Anschlußeinheit unterstützende Befestigungselemente (18) und Abstützelemente (27) für die zu führenden elektrischen Leitungen (33) einbringbar sind.

3. Anschlußeinheit nach Anspruch 1 oder 2,
**dadurch gekennzeichnet**,
daß das Trägerteil (1) als metallisches Strangpreßprofil hergestellt ist und daß zur Bildung der scharniergelenkartigen Verbindung die eine freie Kante der Seitenwandung (3) des Trägerteils (1) eine etwas winklig nach innen geneigte, unmittelbar an der Kante dieser Seitenwandung (3) angesetzte vollzylindrische Form (6) aufweist, die bei ihrem Zusammenfügen mit der Anschlußleiste (23) in eine als Gegenform an einer Seitenfläche dieser Anschlußleiste ausgebildeten, nach außen offene hohlzylindrische Form (5) eingreift.

4. Anschlußeinheit nach Anspruch 3,
**dadurch gekennzeichnet**,
daß auf den Kanten des Schraubkanals (9) nach dem Zusammenfügen der die scharniergelenkartige Verbindung bildenden Formteile (6, 5) nach dem entsprechenden Ausrichten der Anschlußleiste (23) diese mit dem an ihr angesetzten und mit Lochungen versehenen Flansch (24) aufliegt.

5. Anschlußeinheit nach Anspruch 4,
**dadurch gekennzeichnet**,
daß an der die hohlzylindrische Form (5) aufweisenden Seitenfläche der Anschlußleiste (23) jeweils eine weitere, bezüglich der Lage des Flansches (20) symmetrisch angeordnete hohlzylindrische Form (5a) vorgesehen ist.

6. Anschlußeinheit nach Anspruch 1,
**dadurch gekennzeichnet**,
daß die eine Seitenwandung (3) zu ihr gegenüberliegenden Seitenwandung (2) hin teilweise nach innen versetzt zu der Bodenfläche (4) geführt ist, so daß sich ein seitlich nach außen offener Kanal (20) zur Aufnahme von elektrischen Leitern (25) bildet und daß in der Fluchtlinie zur freien Kante an der Bodenfläche und an der freien Kante selbst Rippen (7, 22) ausgeformt sind, die zum Einhängen eines als Abstützelement für zu führende elektrischen Leitungen (33) dienenden Rangierbügels bzw. Rangierhakens (27) dienen.

7. Anschlußeinheit nach Anspruch 6,
**dadurch gekennzeichnet**,
daß die obere Rippe (7) die äußere Wandung einer unmittelbar im Bereich der die vollzylindrische Form (6) aufweisenden Kante ausgebildeten einseitig offenen Nut darstellt, daß deren untere Außenfläche (26) schräg nach innen geneigt ist, daß diese Fläche (26) die Rastfläche für eine an den einzuhängenden Rangierhaken (27) angesetzte Rastnase (28) darstellt.

8. Anschlußeinheit nach Anspruch 7,
**dadurch gekennzeichnet**,
daß die Rastfläche (26) gezahnt (8) ist.

9. Anschlußeinheit nach Anspruch 8,
**dadurch gekennzeichnet**,
daß die Rastfläche (26) so geneigt ist, daß sie die Drehlinie der Rastnase (28) schneidet.

10. Anschlußeinheit nach Anspruch 6,
**dadurch gekennzeichnet**,
daß die Bodenfläche (4) zumindest in der Fluchtlinie zur oberen freien Kante der Seitenwandung (2, 3) Schraubkanäle (10, 11) aufweist und daß die für das Einhängen der Rangierhaken (27) vorgesehene untere Rippe (22) die in Richtung der freien Kante der Seitenwandung (3) weisende Verlängerung einer der Schraubkanalwandungen darstellt.

11. Anschlußeinheit nach Anspruch 1,
**dadurch gekennzeichnet**,
daß die eine Seitenwandung (3) und die Bodenfläche teilweise angenähert eine U-Form bilden und daß der letzte zur freien Kante hin führende Teilabschnitt der Seitenwandung (3) mit dem im Innenbereich liegenden Schenkel der U-Form einen stumpfen Winkel bildet.

12. Anschlußeinheit nach Anspruch 11,
**dadurch gekennzeichnet**,
daß im Bereich des Übergangs der Seitenwandung (3) in das Dach der angenäherten U-Form ein Schraubkanal (12) gebildet ist, über den wahlweise Stege oder Platten (18) mit der Seitenwandung (3) verschraubbar sind.

13. Anschlußeinheit nach Anspruch 11,
**dadurch gekennzeichnet**,
daß an der Innenseite der anderen Seitenwandung (1) ein angenähert senkrecht nach innen offener Führungskanal (13) gebildet ist, in dem jeweils der freie Kantenbereich der Stege oder Platten (18) einbringbar ist.

14. Anschlußeinheit nach Anspruch 11,
**dadurch gekennzeichnet**,
daß sich nach dem Zusammenfügen des Trägerteils und der Anschlußleiste (23) unterhalb dieser Anschlußleiste eine kanalartige Wanne (19) bildet.

## Claims

1. Terminal unit comprising a support part (1) having a bottom surface (4) and side walls (2, 3) and terminal strips (23) accommodated by this support part (1) for joining and connecting incoming and outgoing electric lines (25, 33) preferably in distribution boxes of telephone installations, the support part, for its part, being detachably connected to a base element (32), characterized in that a projection which has a round shape is continuously and integrally formed on the free edge (6) of one side wall, and in that a side surface of the terminal strip has a countershape (5) which corresponds to the projection and has the design of an outwardly open holder, so that, if the projection and the holder are assembled, an at least partial mutual enclosing results and a hinge-like connection of the support part with the terminal strip is formed, in that the free edge of the opposite side wall (2) is designed as threaded channel (9) which on assembly accommodates the shanks of the screw elements which serve for screwing to the terminal strip, and in that the shaping of at least one side wall (3) results additionally in at least one space (20) which, besides the space (19) which is enclosed by the two side walls (2, 3) of the support part (1) and is open on one side, is suitable for the accommodation of electric lines.

2. Terminal unit according to Claim 1, characterized in that additional mounting elements (18) and supporting elements (27) which support the function of the terminal unit can be incorporated in specific shapings (7, 22, 10 - 13) of the side walls and/or bottom surface (4) of the support part (1) for the electric lines (33) to be guided.

3. Terminal unit according to Claim 1 or 2, characterized in that the support part (1) is produced as a metallic extruded profile, and in that for the purpose of forming the hinge-like connection the one free edge of the side wall (3) of the support part (1) has a solid cylindrical form (6) which is angularly slightly inclined towards the inside and directly attached to the edge of this side wall (3) and on its assembly with the terminal strip (23) engages in a hollow cylindrical form (5) which is outwardly open and is constructed as a counterform on a side surface of this terminal strip.

4. Terminal unit according to Claim 3, characterized in that after being aligned correspondingly after the assembly of the machined parts (6, 5) forming the hinge-like connection, the terminal strip (23) rests with the flange (24), which is attached to it and is provided with holes, on the edges of the threaded channel (9).

5. Terminal unit according to Claim 4, characterized in that a further hollow cylindrical form (5a) which is arranged symmetrically with reference to the position of the flange (20) is in each case provided on the side surface, having the hollow cylindrical form (5), of the terminal strip (23).

6. Terminal unit according to Claim 1, characterized in that the one side wall (3) is guided relative to its opposite side wall (2) in part inwardly offset with reference to the bottom surface (4), so that for accommodating electrical conductors (25) a channel (20) is formed which is laterally outwardly open, and in that ribs (7, 22) are shaped in the alignment to the free edge at the bottom surface and at the free edge itself, which ribs serve to fit a distribution bracket or distribution hook (27) which serves as supporting element for the electric lines (33) to be guided.

7. Terminal unit according to Claim 6, characterized in that the upper rib (7) represents the outer wall of a groove which is open at one end and is constructed directly in the region of the edge having the solid cylindrical form (6), in that the lower outer surface (26) of said groove is inwardly obliquely inclined, in that said surface (26) represents the latching surface for a latching tab (28) which is attached to the distribution hook (27) which is to be fitted.

8. Terminal unit according to Claim 7, characterized in that the latching surface (26) is toothed (8).

9. Terminal unit according to Claim 8, characterized in that the latching surface (26) is inclined such that it intersects the rotation line of the latching tab (28).

10. Terminal unit according to Claim 6, characterized in that the bottom surface (4) has threaded channels (10, 11) at least in the alignment to the upper free edge of the side wall (2, 3), and in that the lower rib (22) provided for fitting the distribution hook (27) represents the extension of one of the threaded channel walls pointing in the direction of the free edge of the side wall (3).

11. Terminal unit according to Claim 1, characterized in that the one side wall (3) and the bottom surface form in part an approximate U-shape, and in that the last subsection, leading to the free edge, of the side wall (3) and the limb, located in the inner region, of the U-shape form an obtuse angle.

12. Terminal unit according to Claim 11, characterized in that a threaded channel (12) is formed in the region of the transition of the side wall (3) into the roof of the approximate U-shape, by means of which alternatively webs or plates (18) can be screwed to the side wall (3).

13. Terminal unit according to Claim 11, characterized in that an approximately vertically inwardly open guide channel (13) is formed on the inside of the other side wall (1), into which channel the respective free edge region of the webs or plates (18) can be introduced.

14. Terminal unit according to Claim 11, characterized in that on assembling the support part and the terminal strip (23) a channel-like trough (19) is formed below said terminal strip.

## Revendications

1. Unité de raccordement comportant une partie de support (1) possédant une surface de fond (4) et des parois latérales (2, 3), et des barrettes de connexion (23) logées dans cette partie supérieure (1) et servant à raccorder et à connecter des lignes électriques d'arrivée et de départ (25, 33), notamment dans des répartiteurs d'installations téléphoniques, la partie de support pouvant être, pour sa part, reliée de façon amovible à un élément de base (32),
caractérisée par le fait
qu'un appendice saillant, possédant une forme circulaire est formé, d'une manière continue, sur le bord libre (6) d'une paroi latérale et qu'une surface latérale de la barrette de connexion possède une forme antagoniste (5), qui est adaptée à l'appendice saillant et possède la forme d'un logement ouvert vers l'extérieur, de sorte que, lors de la réunion de l'appendice saillant et du logement, il se produit un enveloppement réciproque au moins partiel, et qu'une liaison, en forme d'articulation à charnière, est formée entre la partie de support et la barrette de connexion, que le bord libre de la paroi latérale opposée (2) est agencé sous la forme d'un canal à vis (9), qui, après l'assemblage, reçoit les tiges des éléments de vissage utilisés pour le vissage de la barrette de connexion, et que grâce à la configuration d'au moins une paroi latérale (3), on obtient, en dehors de la chambre (19) ouverte unilatéralement et entourée par les deux parois latérales (2, 3) de la partie de support (1), en outre au moins une chambre (20) convenant pour y loger des lignes électriques.

2. Unité de raccordement suivant la revendication 1, caractérisée par le fait que des éléments supplémentaires de fixation (18) et des éléments supplémentaires de soutien (27), qui assistent la fonction de l'unité de raccordement et sont prévus pour les lignes électriques (33) devant être guidées, peuvent être insérés dans des évidements particuliers (7, 22, 10-13) des parois latérales et/ou de la surface de fond (4) de la partie de support.

3. Unité de raccordement suivant la revendication 1 ou 2, caractérisée par le fait que la partie de support (1) est réalisée sous la forme d'un profilé métallique extrudé et que, pour la formation de la liaison en forme d'articulation à charnière, un bord libre de la paroi latérale (3) de la partie supérieure (1) possède un élément conformé en forme de cylindre complet (6), qui est légèrement incliné vers l'intérieur et se raccorde directement au bord de cette paroi latérale (3) et qui, lors de son assemblage à la barrette de connexion (23), s'engage dans un élément conformé cylindrique creux (5) ouvert vers l'extérieur et réalisé avec une configuration complémentaire au niveau d'une surface latérale de cette barrette de connexion.

4. Unité de raccordement suivant la revendication 3, caractérisée par le fait qu'après l'assemblage des éléments conformés (6, 5) formant la liaison en forme d'articulation à charnière, après l'alignement correspondant de la barrette de connexion (23), cette dernière est appliquée au moyen de la bride (24), qui est montée sur cette barrette et est pourvue de trous, sur les bords du canal à vis (9).

5. Unité de raccordement suivant la revendication 4, caractérisée par le fait qu'une autre cavité (5a), disposée symétriquement par rapport à la position de la bride (20), est prévue sur la surface latérale de la barrette de connexion (23), qui comporte l'élément conformé cylindrique (5a).

6. Unité de raccordement suivant la revendication 1, caractérisée par le fait qu'une paroi latérale (3) s'étend en direction de la paroi latérale (2) qui est située à l'opposé, en étant partiellement décalée vers l'intérieur en direction de la surface de fond (4) de manière à former un canal (20) ouvert latéralement vers l'extérieur et servant à loger des conducteurs électriques (25), et que sur la droite d'alignement, sur le bord libre au niveau de la surface de fond et sur le bord libre lui-même, sont formées des nervures (7, 22) qui servent à accrocher un étrier de rangement ou un crochet de rangement (27), utilisé comme élément de support pour des conducteurs électriques (33) devant être guidés.

7. Unité de raccordement suivant la revendication 6, caractérisée par le fait que la nervure supérieure (7) représente la paroi extérieure d'une rainure ouverte d'un côté et qui est formée directement au voisinage du bord possédant l'élément conformé en forme de cylindre complet (6), de telle sorte que sa surface latérale inférieure (26) est inclinée obliquement vers l'intérieur et que cette surface (26) représente la surface d'encliquetage pour un bec d'encliquetage (28) raccordé au crochet de rangement (27) devant être accroché.

8. Unité de raccordement suivant la revendication 7, caractérisée par le fait que la surface d'encliquetage (26) est dentelée (8).

9. Unité de raccordement suivant la revendication 8, caractérisée par le fait que la surface d'encliquetage (26) est inclinée de telle sorte qu'elle recoupe l'axe de rotation du bec d'encliquetage (28).

10. Unité de raccordement suivant la revendication 6, caractérisée par le fait que la surface de fond (4) possède des canaux filetés (10, 11), au moins sur l'axe d'alignement sur le bord supérieur libre de la paroi latérale (2, 3), et que la nervure inférieure (22), prévue pour l'accrochage des crochets de rangement (27), représente le prolongement, qui est tourné en direction du bord libre de la paroi latérale (3), de l'une des parois du canal à vis.

11. Unité de raccordement suivant la revendication 1, caractérisée par le fait qu'une paroi latérale (3) et la surface de fond délimitent en partie approximativement une forme en U et que la dernière section partielle, qui rejoint le bord libre, de la paroi latérale (3) fait un angle obtus, avec la branche de la forme en U située dans la zone intérieure.

12. Unité de raccordement suivant la revendication 11, caractérisée par le fait qu'au niveau de la jonction de la paroi latérale (3) avec la paroi approximativement en forme de U est formé un canal à vis (12), au moyen duquel au choix des barrettes ou des plaques (18) peuvent être vissées à la paroi latérale (3).

13. Unité de raccordement suivant la revendication 11, caractérisée par le fait que sur la face intérieure de l'autre paroi latérale (1) est formé un canal de guidage (13) ouvert approximativement verticalement en direction de l'intérieur et dans lequel peut être insérée respectivement la zone libre du bord des barrettes ou des plaques (18).

14. Unité de raccordement suivant la revendication 11, caractérisée par le fait qu'après l'assemblage de la partie de support et de la barrette de raccordement (23), une cuvette en forme de canal (19) est formée au-dessous de cette barrette de raccordement.
